# EUROPEAN PATENT APPLICATION

(11) **EP 4 672 007 A1**
(43) Date of publication of application: **31.12.2025**
(21) Application number: 25177870.0
(22) Date of filing: 21.05.2025
(51) Int. Cl.: G06F 13/38, G06F 3/06, G06F 15/78, G06F 13/42

(54) **SYSTEMS AND METHODS OF CONCURRENT EXECUTION IN PROCESSING IN MEMORY SYSTEMS**

(30) Priority: 28.06.2024 US 202463666105 P; 29.08.2024 US 202463688818 P; 27.01.2025 US 202519038683
(71) Applicant: Samsung Electronics Co., Ltd., Suwon-si, Gyeonggi-do 16677 (KR)
(72) Inventor: NGUYEN, Marie Mai, San Jose, CA, 95134 (US); PITCHUMANI, Rekha, San Jose, CA, 95134 (US); JEONG, Hyoun Kwon, San Jose, CA, 95134 (US); KANG, Yangwook, San Jose, CA, 95134 (US); KIM, Younghoon, San Jose, CA, 95134 (US); LIU, Wenjie, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

Provided are systems, methods, and apparatuses for systems and methods of execution of processing-in-memory, PIM, operations. In one aspect, the systems, devices, and methods include receiving a memory request for processing on a memory die; modifying the memory request based on the memory request being configured for processing on the memory die; and sending the modified memory request to a processing unit on the memory die. In another aspect, the systems, devices, and methods include enabling the memory die for processing of PIM on-die processing and disabling the memory die for off-die processing.

## Description

### TECHNICAL FIELD

The disclosure relates generally to memory systems, and more particularly to processing in memory architecture with concurrent execution.

### BACKGROUND

The present background section is intended to provide context only, and the disclosure of any concept in this section does not constitute an admission that said concept is prior art.

Memory management is a form of resource management applied to computer memory. Some aspects of memory management provide dynamically allocation of portions of memory to programs at their request, and free the allocations for reuse when the portions of memory are no longer needed. Memory management provides important functionality for computer systems. However, improvements in memory management can be made with regards to high-performance computing and artificial intelligence (AI) systems. for all purposes.

### SUMMARY

In various embodiments, the systems and methods described herein include systems, methods, and apparatuses for concurrent execution of processing-in-memory (PIM) operations. In some aspects, the techniques described herein relate to a method of concurrent memory access, the method including: receiving, at a base die processor on a base die of a stacked memory module, a first memory request for processing on a first memory die of multiple memory dies of the stacked memory module; based on the first memory request being configured for processing on the first memory die, activating a processing unit on the first memory die; sending the first memory request to the processing unit on the first memory die, the first memory request being processed on the first memory die based on activating the processing unit on the first memory die and sending the first memory request to the processing unit on the first memory die; and deactivating the processing unit on the first memory die based on sending the first memory request to the processing unit on the first memory die.

In some aspects, the techniques described herein relate to a method, further including: receiving, at the base die processor, a second memory request for processing on a second processing unit; and providing data fetched from a second memory die of the stacked memory module to the second processing unit based on the second memory request, wherein a processing unit on the second memory die remains deactivated based on the second processing unit being external to the multiple memory dies of the stacked memory module.

In some aspects, the techniques described herein relate to a method, wherein: the second memory request is processed on the second processing unit, and at least a portion of accessing data associated with the first memory request or processing the first memory request overlaps at least a portion of processing the second memory request on the second processing unit.

In some aspects, the techniques described herein relate to a method, wherein at least a portion of accessing data associated with the first memory request or processing the first memory request overlaps at least a portion of fetching the data from the second memory die.

In some aspects, the techniques described herein relate to a method, wherein the second processing unit includes a processing unit on the base die of the stacked memory module or a graphical processing unit that is communicatively coupled to the base die processor of the stacked memory module.

In some aspects, the techniques described herein relate to a method, wherein: data associated with the first memory request is stored in a memory bank of the first memory die, and data associated with the second memory request is stored in a memory bank of the second memory die.

In some aspects, the techniques described herein relate to a method, wherein: activating the processing unit on the first memory die includes toggling a bit of a register of the stacked memory module from a deactivation value to an activation value, and deactivating the processing unit on the first memory die includes toggling the bit of the register from the activation value to the deactivation value.

In some aspects, the techniques described herein relate to a method, wherein the multiple memory dies of the stacked memory module include one or more layers of memory dies stacked on top of the base die.

In some aspects, the techniques described herein relate to a method, wherein the base die processor includes an interposer connected to processing units on the base die of the stacked memory module, to processing units on the multiple memory dies of the stacked memory module, and to one or more graphical processing units connected to the stacked memory module.

In some aspects, the techniques described herein relate to a method, wherein the base die processor is incorporated in a memory controller on the base die of the stacked memory module.

In some aspects, the techniques described herein relate to a method, wherein the base die processor is incorporated in a snoop filter on the base die of the stacked memory module.

In some aspects, the techniques described herein relate to a method of concurrent memory access, the method including: receiving, at a base die processor on a base die of a stacked memory module, a first memory request for processing on a first memory die of multiple memory dies of the stacked memory module; based on the first memory request being configured for processing on the first memory die, modifying the first memory request, the modified first memory request being based on the base die processor adding an indicator that indicates to process the first memory request at the first memory die; and sending the modified first memory request to a processing unit on the first memory die, the first memory request being processed on the first memory die based on the indicator indicating to process the first memory request at the first memory die.

In some aspects, the techniques described herein relate to a method, further including: receiving, at the base die processor, a second memory request for processing on a second processing unit; and providing data fetched from a second memory die of the stacked memory module to the second processing unit based on the second memory request.

In some aspects, the techniques described herein relate to a method, wherein: the second memory request is processed on the second processing unit, and at least a portion of accessing data associated with the modified first memory request or processing the modified first memory request overlaps at least a portion of processing the second memory request on the second processing unit.

In some aspects, the techniques described herein relate to a method, wherein at least a portion of accessing data associated with the modified first memory request or processing the modified first memory request overlaps at least a portion of fetching the data from the second memory die.

In some aspects, the techniques described herein relate to a method, wherein the second processing unit includes a processing unit on the base die of the stacked memory module or a graphical processing unit that is communicatively coupled to the base die processor of the stacked memory module.

In some aspects, the techniques described herein relate to a method, wherein: data associated with the first memory request is stored in a memory bank of the first memory die, and data associated with the second memory request is stored in a memory bank of the second memory die.

In some aspects, the techniques described herein relate to a non-transitory computer-readable medium storing code that includes instructions executable by a processor on a base die of a stacked memory module to: receive a first memory request for processing on a first memory die of multiple memory dies of the stacked memory module; based on the first memory request being configured for processing on the first memory die, activate a processing unit on the first memory die; send the first memory request to the processing unit on the first memory die, the first memory request being processed on the first memory die based on activating the processing unit on the first memory die and sending the first memory request to the processing unit on the first memory die; and deactivate the processing unit on the first memory die based on sending the first memory request to the processing unit on the first memory die.

In some aspects, the techniques described herein relate to a non-transitory computer-readable medium, wherein the code includes further instructions executable by the processor to: receive a second memory request for processing on a second processing unit; and provide data fetched from a second memory die of the stacked memory module to the second processing unit based on the second memory request, wherein a processing unit on the second memory die remains deactivated based on the second processing unit being external to the multiple memory dies of the stacked memory module.

In some aspects, the techniques described herein relate to a non-transitory computer-readable medium, wherein: the second memory request is processed on the second processing unit, and at least a portion of accessing data associated with the first memory request or processing the first memory request overlaps at least a portion of processing the second memory request on the second processing unit.

A computer-readable medium is disclosed. The computer-readable medium can store instructions that, when executed by a computer, cause the computer to perform substantially the same or similar operations as described herein are further disclosed. Similarly, non-transitory computer-readable media, devices, and systems for performing substantially the same or similar operations as described herein are further disclosed.

The systems and methods described herein include multiple advantages and benefits. For example, the systems and methods of processing-in-memory (PIM) architecture with concurrent execution improves throughput and reduces latency associated with memory-intensive operations based on the systems and methods enabling concurrent access to memory by a graphical processing unit (GPU) and an in-memory processing unit. Also, the systems and methods of processing-in-memory (PIM) architecture with concurrent execution improves end-to-end performance of memory-intensive operations (e.g., performance of a memory operation between an in-memory processing unit and memory; performance of a memory operation between a GPU and memory, etc.).

### BRIEF DESCRIPTION OF THE DRAWINGS

The above-mentioned aspects and other aspects of the present systems and methods will be better understood when the present application is read in view of the following figures in which like numbers indicate similar or identical elements. Further, the drawings provided herein are for purpose of illustrating certain embodiments only; other embodiments, which may not be explicitly illustrated, are not excluded from the scope of this disclosure.

These and other features and advantages of the present disclosure will be appreciated and understood with reference to the specification, claims, and appended drawings wherein:
FIG. 1 illustrates an example system in accordance with one or more implementations as described herein.
FIG. 2 illustrates details of the system of FIG. 1, according to one or more implementations as described herein.
FIG. 3 illustrates an example system in accordance with one or more implementations as described herein.
FIG. 4 illustrates an example in accordance with one or more implementations as described herein.
FIG. 5 depicts a flow diagram illustrating an example method associated with the disclosed systems, in accordance with example implementations described herein.
FIG. 6 depicts a flow diagram illustrating an example method associated with the disclosed systems, in accordance with example implementations described herein.

While the present systems and methods are susceptible to various modifications and alternative forms, specific embodiments thereof are shown by way of example in the drawings and will herein be described. The drawings may not be to scale. It should be understood, however, that the drawings and detailed description thereto are not intended to limit the present systems and methods to the particular form disclosed, but to the contrary, the intention is to cover all modifications, equivalents, and alternatives falling within the spirit and scope of the present systems and methods as defined by the appended claims.

### DETAILED DESCRIPTION OF VARIOUS EMBODIMENTS

The details of one or more embodiments of the subject matter described herein are set forth in the accompanying drawings and the description below. Other features, aspects, and advantages of the subject matter will become apparent from the description, the drawings, and the claims.

Various embodiments of the present disclosure now will be described more fully hereinafter with reference to the accompanying drawings, in which some, but not all embodiments are shown. Indeed, the disclosure may be embodied in many forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Like numbers refer to like elements throughout. Arrows in each of the figures depict bi-directional data flow and/or bi-directional data flow capabilities. The terms "path," "pathway" and "route" are used interchangeably herein.

Embodiments of the present disclosure may be implemented in various ways, including as computer program products that comprise articles of manufacture. A computer program product may include a non-transitory computer-readable storage medium storing applications, programs, program components, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

In one embodiment, a non-volatile computer-readable storage medium may include a floppy disk, flexible disk, hard disk, solid-state storage (SSS) (for example a solid-state drive (SSD)), solid state card (SSC), solid state module (SSM), enterprise flash drive, magnetic tape, or any other non-transitory magnetic medium, and/or the like. A non-volatile computer-readable storage medium may include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc, any other non-transitory optical medium, and/or the like. Such a non-volatile computer-readable storage medium may include read-only memory (ROM), programmable read-only memory (PROM), erasable programmable read-only memory (EPROM), electrically erasable programmable read-only memory (EEPROM), flash memory (for example Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In one embodiment, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory component (RIMM), dual in-line memory component (DIMM), single in-line memory component (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may take the form of a hardware embodiment, a computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, a hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially, such that one instruction is retrieved, loaded, and executed at a time. In some example embodiments, retrieval, loading, and/or execution may be performed in parallel, such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not be necessarily all referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "predetermined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. Similarly, various waveforms and timing diagrams are shown for illustrative purpose only. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on chip (SoC), an assembly, and so forth.

The systems and methods described herein may be based on and/or may include High Bandwidth Memory (HBM). HBM can include a type of memory architecture used in high-performance computing applications that requires fast data transfer speeds (e.g., generative artificial intelligence (AI), AI inference, AI training, large language models (LLMs), etc.). HBM can use 3D stacking technology to pack more memory chips into a smaller space, reducing the distance data needs to travel between the processor and memory. This results in higher bandwidth, which allows for faster data transfer, and lower power consumption, which can help extend battery life. The systems and methods described herein may be based on and/or may include Compute Express Link (CXL) memory. CXL memory can include memory with a high-speed interface that allows for communication between devices, such as processors, memory, accelerators, storage, and other IO devices. CXL memory can be designed for high-performance data center computers and may use a Peripheral Component Interconnect Express (PCIe) physical and/or electrical interface. In some cases, an HBM module may connect (e.g., via an interposer) to compute resources (e.g., CPU, GPU, etc.). In some examples, an HBM module may connect to a System on Chip (SoC). In some cases, the SoC may include compute resources (e.g., SoC die, CPU, GPU, etc.).

The systems and methods may include and/or may incorporate processing in memory (PIM). PIM can refer to integration of a processor with memory (e.g., RAM, DRAM) on a single chip (e.g., HBM stack). PIM can allow computations and processing to be performed within the memory of a computer, GPU accelerator, server, system on chip (SoC), or similar device. The arrangement speeds up the overall processing of tasks by performing them within the memory module. A processing element on a memory chip can be configured to process operations by using at least one of data provided by a host and data read from a memory bank (from a DRAM die of an HBM stack). The PIM systems and methods described can allow processors to be implemented right into the DRAM, reducing data movement and improving the energy and data efficiency of AI accelerator systems by offloading some of the data calculation work from the processor / GPU onto the memory itself.

The systems and methods described herein may be based on and/or may include a memory processing unit (MPU). An MPU may be configured to provide memory protection (e.g., for in-memory processing). Memory protection can include a way to control memory access rights on a computer system, and may be a part of instruction set architectures and operating systems. Memory protection may prevent a process from accessing memory that has not been allocated to it, preventing a bug or malware within a process from affecting other processes, or the operating system itself. The MPU can trigger a fault exception when an access violation is detected. The MPU may allow privileged software to define memory regions and assign memory access permission and memory attributes to each of them. The memory attributes may define the ordering and merging behaviors of these memory regions, as well as caching and buffering attributes. The MPU may monitor memory transactions, including instruction fetches and data accesses from a central processing unit (CPU), graphical processing unit (GPU), processing unit of a base die (e.g., of an HBM), processing unit of a DRAM die (e.g., of an HBM), etc. In some cases, an MPU may be based on and/or may incorporate an MPU agent (e.g., base die processor) as described herein.

The systems and methods described herein may be based on and/or may include a memory management unit (MMU), which may be referred to as a paged memory management unit (PMMU). MMUs can include a computer hardware unit that examines memory references (e.g., memory requests, read request, write request) on a memory bus. MMUs may provide virtual-to-physical address translation, memory isolation, and/or memory protection. For example, MMUs may translate memory requests based on virtual memory addresses into physical addresses in main memory. In some cases, an MPU may include one or more MMUs.

The systems and methods may include and/or may incorporate a load-store architecture. Load and store instructions can include computer instructions that move data between registers and memory. Load/store instructions may be used for many tasks, including: manipulating data, accessing variables, sharing data between programs, optimizing system performance, etc. In a load-store architecture, instructions may be divided into two categories: memory access (load and store) and arithmetic logic unit (ALU) operations. The systems and methods may be based on load store operations of one or more processing units (e.g., graphic processing unit (GPU), tensor processing unit (TPU), neural processing unit (NPU), etc.).

The systems and methods may include and/or may incorporate a snoop filter. A snoop filter can include logical circuitry (e.g., microcontrollers, processors, memory, etc.) that monitors access to a shared data resource by multiple processors (e.g., processing units on a base die of a stacked memory module, processing units on a DRAM die of a stacked memory module, processing elements of a GPU, etc.). Snoop filters can include cache-like structures (e.g., cache memory). Snoop filters can keep track of cached data locations across processing units (PUs) or processing elements (PEs). Snoop filters can reduce snooping traffic by filtering snoop requests. This can allow a coherent Network on Chip (NoC) interconnect to target only the necessary caches, instead of broadcasting to all caches.

The systems and methods described herein may be based on and/or may include a physical layer (PHY). A PHY can include an electronic circuit that connects a network interface controller to a physical medium (e.g., copper cable, optical fiber). A PHY may be responsible for the physical layer functions of the Open Systems Interconnection (OSI) model.

The systems and methods described herein may be based on and/or may include Institute of Electrical and Electronics Engineers (IEEE) 1500. IEEE 1500 can include a standard that defines how to test the core designs of an SoC. IEEE 1500 can include a method for designing integrated circuits (ICs) with embedded, non-mergeable cores. IEEE 1500 can use a hardware architecture and core test language (CTL) to communicate between core designers and integrators.

The systems and methods described herein may be based on and/or may include buffer dies. In some cases, buffer dies may be referred to as base dies or logic dies. A buffer die may include the bottom layer of an HBM stack (e.g., HBM module). A buffer die may control the stacked memory of an HBM module. In some cases, a buffer die can include test logic and/or buffer circuitry. A buffer die may include a PHY, Memory Built in Self-Test (MBIST) block, and/or IEEE1500. The buffer die and the core dies may send and receive data through through-silicon vias (TSVs).

The systems and methods described herein may be based on and/or may include Processing-in-Memory (PIM) HBM. PIM-HBM can include memory technology that integrates processors into memory (e.g., dynamic random-access memory (DRAM)) to improve the efficiency of artificial intelligence (AI) accelerator systems. PIM-HBM can reduce data movement by offloading some data calculation work from a central processing unit (CPU) and/or graphical processing unit (GPU) to memory. Computational offloading based on PIM-HBM can improve performance up to four times and reduce energy consumption by 70% compared to other memory solutions. PIM-HBM can be applied to a range of AI applications, including speech recognition, translation, and recommendation. PIM-HBM can stimulate growth in the use of AI applications that require continuous performance improvements, such as mobile, data centers, and high-performance computing (HPC).

For some systems, the area available to add compute resources (e.g., processing units) to DRAM dies (DDs) may be relatively limited. For example, compared to the area of a base die or buffer die (BD), the available area of a DD can limit the amount of compute dies or processing units (PUs) that can be incorporated on a given DD. Also, with some systems, concurrent execution of GPU processes and DRAM die PU processes is not available. For example, only the GPU or a DRAM die PU may access memory of an HBM at a given time on some systems (e.g., serialized execution). For instance, PIM execution of a PU of the HBM may be blocked while a GPU accesses the memory of the HBM. Similarly, a GPU may be blocked from accessing HBM memory during processor-in-memory PIM execution (e.g., execution by a DRAM die PU). This lack of concurrent execution reduces compute performance and increases latency for such systems. Also, mode changes from GPU processing to PIM processing, and vice versa, add additional latency.

The systems and methods described herein enable concurrent execution (e.g., based on a memory processing unit (MPU) agent). The systems and methods may provide a hybrid architecture for PIM based on high bandwidth memory (HBM) that allows concurrent GPU-PIM execution (e.g., enabling the GPU to access HBM during PIM processing). The hybrid architecture may include processing units in a base layer or buffer die (BD) of an HBM as well as processing units in DRAM dies (DDs) of the HBM. The BD may include an MPU agent that controls one or more aspects of processing on the DRAM die PUs (DD PUs), including initiating processing, providing data for processing, providing instructions for processing, triggering processing, stopping processing, generating an exception during processing, etc., on DD PUs. The MPU agent may be configured to orchestrate data movement between a GPU, DD PUs, and/or buffer die processing units (BD PUs). In this hybrid architecture, embodiments may be implemented to enable GPU-PIM concurrent execution. One or more embodiments may be based on a custom memory controller configured to distinguish between memory requests associated with a GPU, BD PUs, and/or DD PUs. Some embodiments may be based on a region snoop filter being configured to distinguish between GPU, BD, and DD-associated memory requests.

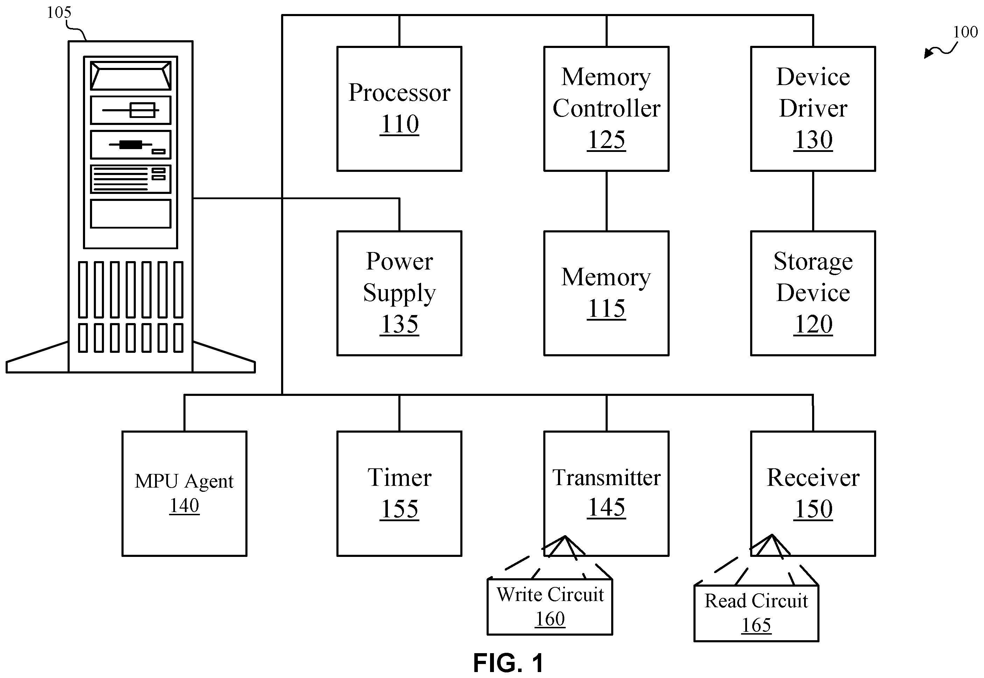

**FIG. 1** illustrates an example system 100 in accordance with one or more implementations as described herein. In FIG. 1, machine 105, which may be termed a host, a system, or a server, is shown. While FIG. 1 depicts machine 105 as a tower computer, embodiments of the disclosure may extend to any form factor or type of machine. For example, machine 105 may be a rack server, a blade server, a desktop computer, a tower computer, a mini tower computer, a desktop server, a laptop computer, a notebook computer, a tablet computer, etc.

Machine 105 may include processor 110, memory 115, and storage device 120. Processor 110 may be any variety of processor. It is noted that processor 110, along with the other components discussed below, are shown outside the machine for ease of illustration: embodiments of the disclosure may include these components within the machine. While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), Phase Change Memory (PCM), or Resistive Random-Access Memory (ReRAM). Memory 115 may include volatile and/or non-volatile memory. Memory 115 may use any desired form factor: for example, Single In-Line Memory Module (SIMM), Dual In-Line Memory Module (DIMM), Non-Volatile DIMM (NVDIMM), etc. Memory 115 may be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may support an operating system under which various applications may be running. These applications may issue requests (which may be termed commands) to read data from or write data to either memory 115 or storage device 120. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may support any desired protocol or protocols, including, for example, the Non-Volatile Memory Express (NVMe^{®}) protocol, a Serial Attached Small Computer System Interface (SCSI) (SAS) protocol, or a Serial AT Attachment (SATA) protocol. Storage device 120 may include any desired interface, including, for example, a Peripheral Component Interconnect Express (PCIe^{®}) interface, or a Compute Express Link (CXL^{®}) interface. Storage device 120 may take any desired form factor, including, for example, a U.2 form factor, a U.3 form factor, a M.2 form factor, Enterprise and Data Center Standard Form Factor (EDSFF) (including all of its varieties, such as E1 short, E1 long, and the E3 varieties), or an Add-In Card (AIC).

While FIG. 1 uses the term "storage device," embodiments of the disclosure may include any storage device formats that may benefit from the use of computational storage units, examples of which may include hard disk drives, Solid State Drives (SSDs), or persistent memory devices, such as PCM, ReRAM, or MRAM. Any reference to "storage device" "SSD" below should be understood to include such other embodiments of the disclosure and other varieties of storage devices. In some cases, the term "storage unit" may encompass storage device 120 and memory 115. Machine 105 may include power supply 135. Power supply 135 may provide power to machine 105 and its components.

Machine 105 may include transmitter 145 and receiver 150. Transmitter 145 or receiver 150 may be respectively used to transmit or receive data. In some cases, transmitter 145 and/or receiver 150 may be used to communicate with memory 115 and/or storage device 120. Transmitter 145 may include write circuit 160, which may be used to write data into storage, such as a register, in memory 115 and/or storage device 120. In a similar manner, receiver 150 may include read circuit 165, which may be used to read data from storage, such as a register, from memory 115 and/or storage device 120. In the illustrated example, machine 105 may include timer 155, which may be used to time one or more operations, indicate a time period, indicate a lapse of time, indicate an expiration, indicate a timeout, etc.

In one or more examples, machine 105 may be implemented with any type of apparatus. Machine 105 may be configured as (e.g., as a host of) one or more servers such as a compute server, a storage server, storage node, a network server, a supercomputer, data center system, and/or the like, or any combination thereof. Additionally, or alternatively, machine 105 may be configured as (e.g., as a host of) one or more computers such as a workstation, a personal computer, a tablet, a smartphone, and/or the like, or any combination thereof. Machine 105 may be implemented with any type of apparatus that may be configured as a device including, for example, an accelerator device, a storage device, a network device, a memory expansion and/or buffer device, a central processing unit (CPU), a graphics processing unit (GPU), a neural processing unit (NPU), a tensor processing unit (TPU), optical processing units (OPU), and/or the like, or any combination thereof.

Any communication between devices including machine 105 (e.g., host, computational storage device, and/or any intermediary device) can occur over an interface that may be implemented with any type of wired and/or wireless communication medium, interface, protocol, and/or the like including PCIe, NVMe, Ethernet, NVMe-oF, Compute Express Link (CXL), and/or a coherent protocol such as CXL.mem, CXL.cache, CXL.IO and/or the like, Gen-Z, Open Coherent Accelerator Processor Interface (OpenCAPI), Cache Coherent Interconnect for Accelerators (CCIX), Advanced eXtensible Interface (AXI) and/or the like, or any combination thereof, Transmission Control Protocol/Internet Protocol (TCP/IP), FibreChannel, InfiniBand, Serial AT Attachment (SATA), Small Computer Systems Interface (SCSI), Serial Attached SCSI (SAS), iWARP, any generation of wireless network including 2G, 3G, 4G, 5G, and/or the like, any generation of Wi-Fi, Bluetooth, near-field communication (NFC), and/or the like, or any combination thereof. In some embodiments, the communication interfaces may include a communication fabric including one or more links, buses, switches, hubs, nodes, routers, translators, repeaters, and/or the like. In some embodiments, system 100 may include one or more additional apparatus having one or more additional communication interfaces.

Any of the functionality described herein, including any of the host functionality, device functionally, MPU agent 140 functionality, and/or the like, may be implemented with hardware, software, firmware, or any combination thereof including, for example, hardware and/or software combinational logic, sequential logic, timers, counters, registers, state machines, volatile memories such as at least one of or any combination of the following: dynamic random access memory (DRAM) and/or static random access memory (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application specific integrated circuits (ASICs) CPUs including complex instruction set computer (CISC) processors such as x86 processors and/or reduced instruction set computer (RISC) processors such as RISC-V and/or ARM processors), GPUs, NPUs, TPUs, OPUs, and/or the like, executing instructions stored in any type of memory. In some embodiments, one or more components of MPU agent 140 may be implemented as an SoC.

In some examples, MPU agent 140 may include any one or combination of logic (e.g., logical circuit), hardware (e.g., base die processor, processing unit, memory, storage), software, firmware, and the like. In some cases, MPU agent 140 may perform one or more functions in conjunction with processor 110. In some cases, at least a portion of MPU agent 140 may be implemented in or in conjunction with processor 110 and/or memory 115. The one or more logic circuits of MPU agent 140 may include any one or combination of multiplexers, registers, logic gates, arithmetic logic units (ALUs), cache, computer memory, microprocessors, processing units (CPUs, GPUs, NPUs, and/or TPUs), FPGAs, ASICs, etc., that enable MPU agent 140 to provide systems and methods of concurrent execution of processing-in-memory (PIM) operations.

In one or more examples, MPU agent 140 may enable GPU-PIM concurrent execution that improves throughput and reduces latency associated with memory-intensive operations. Also, GPU-PIM concurrent execution of MPU agent 140 may improve end-to-end performance of memory-intensive operations (e.g., performance of a memory operation between an in-memory processing unit and memory; performance of a memory operation between a GPU and memory, etc.).

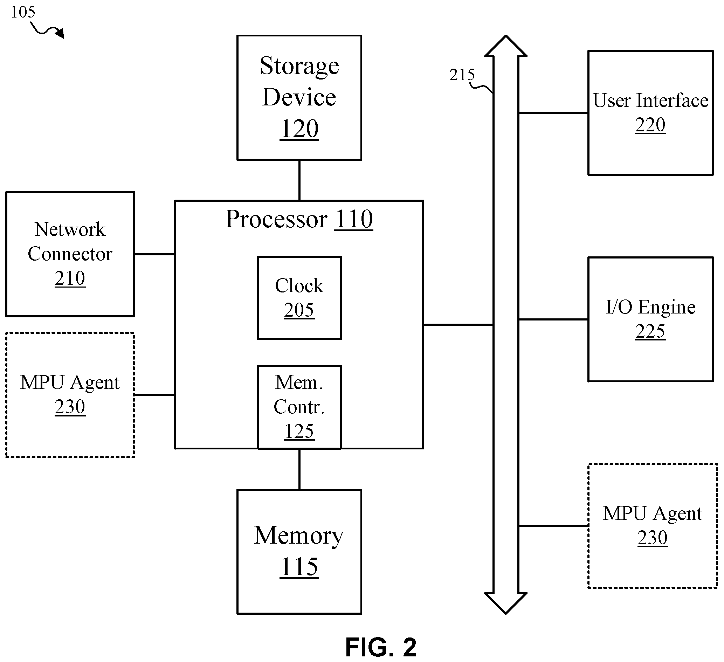

**FIG.** 2 illustrates details of machine 105 of FIG. 1, according to examples described herein. In the illustrated example, machine 105 may include processor 110. Processor 110 may include one or more processors and/or one or more dies. Processor 110 may include memory controller 125 (e.g., one or more memory controllers) and clock 205 (e.g. one or more clocks), which may be used to coordinate the operations of the components of the machine. Processor 110 may be coupled to memory 115 (e.g., one or more memory chips, stacked memory, etc.), which may include random access memory (RAM), read-only memory (ROM), or other state preserving media, as examples. Processor 110 may be coupled to storage device 120 (e.g., one or more storage devices), and to network connector 210, which may be, for example, an Ethernet connector or a wireless connector. Processor 110 may be connected to bus 215 (e.g., one or more buses), to which may be attached user interface 220 (e.g., one or more user interfaces) and Input/Output (I/O) interface ports that may be managed using I/O engine 225 (e.g., one or more I/O engines), among other components. As shown, processor 110 may be coupled to MPU agent 230, which may be an example of MPU agent 140 of FIG. 1. Additionally, or alternatively, processor 110 may be connected to bus 215, to which may be attached MPU agent 230.

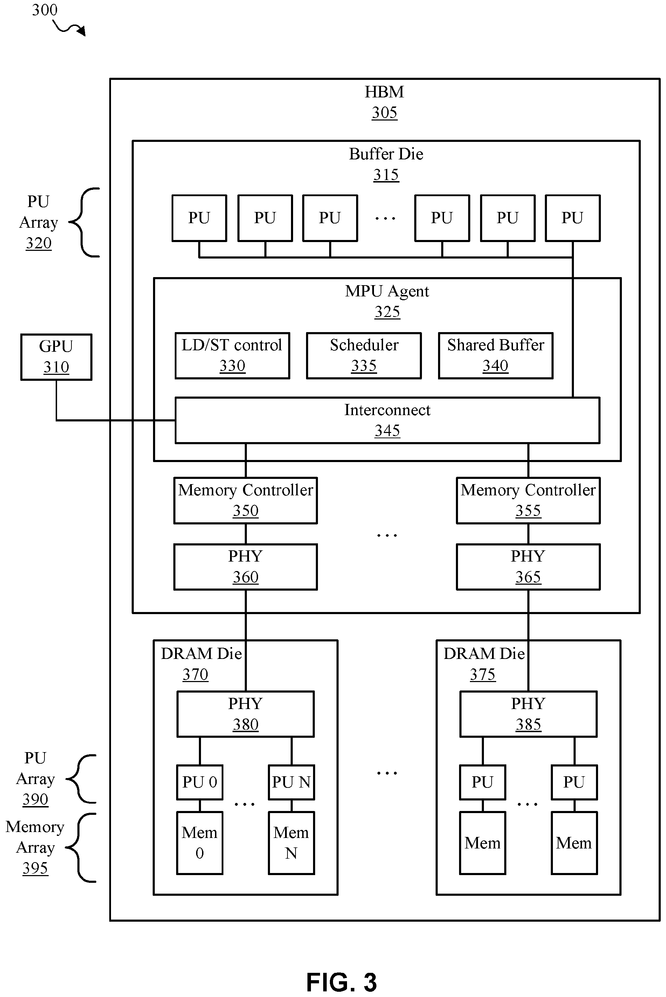

**FIG. 3** illustrates an example system 300 in accordance with one or more implementations as described herein. In some configurations, one or more aspects of system 300 may be implemented by or in conjunction with MPU agent 140 of FIG. 1 and/or MPU agent 230 of FIG. 2. In some configurations, one or more aspects of system 300 may be implemented by or in conjunction with machine 105, components of machine 105, or any combination thereof.

In the illustrated example, system 300 may include high-bandwidth memory (HBM) 305 and graphical processing unit (GPU) 310 communicatively connected to HBM 305. As shown, HBM 305 may include buffer die 315, which may include one or more processing units (e.g., PU array 320). Buffer die 315 may include a memory processing unit (MPU). In some cases, the MPU may include hardware (integrated circuit, logical circuitry), firmware, and/or software for controlling one or more aspects of processing-in-memory. In some cases, the MPU may include memory processing unit (MPU) agent 325. In some cases, HBM 305 may be referred to as an MPU (e.g., an HBM with processors for processing-in-memory), which include MPU agent 325.

MPU agent 325 may include logic (e.g., base die processor with one or more cores, memory, cache, registers, buffers, etc.) to provide GPU-PIM concurrent execution. The logic may include any combination of hardware (e.g., memory, processor, microcontroller, storage), logical circuitry, firmware, and/or software to provide GPU-PIM concurrent execution. As shown, MPU agent 325 may include load store (LD/ST) control 330, scheduler 335, and shared buffer 340. In some cases, LD/ST control 330 may include a command register file. A command register file may include a file that controls one or more aspects of GPU-PIM concurrent execution. In some cases, the MPU agent 325 may request a processing unit (e.g., DRAM die processing unit, buffer die processing unit) to perform commands by writing to the command register file of LD/ST control 330. As shown, buffer die 315 may include one or more memory controllers (e.g., memory controller 350, memory controller 355) and one or more physical layers (e.g., PHY 360, PHY 365).

As shown, HBM 305 may include one or more DRAM dies (e.g., DRAM die 370, DRAM die 375, etc.). DRAM die 370 may include PHY 380, one or more processing units (e.g., PU array 390), and one or more memory banks (e.g., memory array 395). In some cases, PU array 390 may include N processing units (e.g., PU 0 to PU N-1) and memory array 395 may include N memory banks (e.g., memory bank 0 to memory bank N).

DRAM die 375 may include PHY 385, one or more processing units (e.g., a second PU array of N processing units, less than N processing units, or more than N processing units), and one or more memory banks (e.g., a second memory array of N memory banks, less than N memory banks, or more than N memory banks). In some cases, PHY 360 and PHY 380 may provide a physical connection between buffer die 315 (e.g., via memory controller 350) and DRAM die 370. Similarly, PHY 365 and PHY 385 may provide a physical connection between buffer die 315 (e.g., via memory controller 355) and DRAM die 375.

HBM 305 may include one or more memory layers (e.g., layers of memory dies) stacked on top of one or more logical layers. For example, DRAM die 370 and/or DRAM die 375 (e.g., in one or more memory layers) may be stacked on top of buffer die 315. On or more vias (e.g., through silicon vias (TSVs)) may connect DRAM die 370 and/or DRAM die 375 to buffer die 315. In some examples, a PU of DRAM die 370 and/or a PU of DRAM die 375 may perform one or more PIM operations. In some cases, a PU of DRAM die 370 and/or a PU of DRAM die 375 may perform one or more PIM operations concurrently with a memory operation of GPU 310.

In some examples, scheduler 335 may schedule one or more aspects of GPU-PIM concurrent execution. In some cases, scheduler 335 may be configured as a memory request scheduler. For example, scheduler 335 may schedule memory requests associated with HBM memory (e.g., memory requests of GPU 310, a processing unit of buffer die 315, a processing unit of DRAM die 370, and/or a processing unit of DRAM die 375, etc.). Shared buffer 340 may store (e.g., temporarily store) commands, memory requests, instructions, data, etc., associated with GPU-PIM concurrent execution. MPU agent 325 may include interconnect 345. Interconnect 345 may provide a physical interface between GPU 310, processing units of buffer die 315, processing units of DRAM die 370, and/or processing units of DRAM die 375. Thus, interconnect 345 may electrically connect GPU 310, processing units of buffer die 315, processing units of DRAM die 370, and processing units of DRAM die 375 within MPU agent 325.

In some examples, MPU agent 325 may route memory requests to memory controllers of buffer die 315 based on information in the memory requests. For example, MPU agent 325 may route memory requests based on a location of data associated with the memory request. For instance, when data associated with the memory request is located in memory bank 0 of DRAM die 370, then MPU agent 325 may route the memory request to memory controller 350 based on memory controller 350 being communicatively linked to DRAM die 370. Thus, when MPU agent 325 determines that a first memory request is for DRAM die 370, MPU agent 325 may route the first memory request to memory controller 350. And when MPU agent 325 determines that a second memory request is for DRAM die 375, MPU agent 325 may route the second memory request to memory controller 355, and so on.

In some examples, GPU 310 may execute a kernel and MPU agent 325 may execute a kernel concurrently. In some cases, MPU agent 325 may enable and/or disable a processing unit (PU) of DRAM die 370 and/or DRAM die 375. MPU agent 325 may issue load/store (ld/st) for a PU of DRAM die 370 and/or DRAM die 375 (e.g., for an enabled PU). In some cases, when MPU agent 325 enables a PU of DRAM die 370 or DRAM die 375, any DRAM command (e.g., read, write, etc.) received by that PU may trigger the enabled PU to execute (e.g., lock step execution of the enabled PU triggered by ld/st). Thus, if GPU 310 or a PU of buffer die 315 sends a first memory request to an enabled PU of DRAM die 370 and MPU agent 325 sends a second memory request to the same enabled PU of DRAM die 370, then the enabled PU of DRAM die 370 may execute on the wrong data from first memory request. However, such memory request collisions are avoided based on the systems and methods described herein.

In some examples, GPU 310 may initiate or be associated with a first memory request to DRAM die 370 (e.g., GPU: read memory bank 0, row 2, col 0). MPU agent 325 may initiate or may be associated with a second memory request to DRAM die 370 (e.g., MPU agent: read memory bank 0, row 0, col 1). In some cases, GPU 310 may schedule one or more memory requests to be processed at GPU 310, schedule one or more memory requests to be processed at a PU of buffer die 315, and/or schedule one or more memory requests to be processed at a PU of a DRAM die of HBM 305 (e.g., DRAM die 370, DRAM die 375). In some cases, GPU 310 may process some instructions (e.g., vector-based computations) and GPU 310 may offload other instructions (e.g., non-vector computations) to PUs of buffer die 315 and/or PUs of DRAM dies of HBM 305.

The initiation, submission, and/or processing of the first memory request may overlap at least a portion of the initiation, submission, and/or processing of the second memory request. For example, GPU 310 may submit the first memory request to DRAM die 370 and MPU agent 325 may concurrently submit the second memory request to DRAM die 370, where both memory requests are associated with the same memory bank of DRAM die 370 (e.g., bank 0 for example of the memory banks of memory array 395). In some cases, MPU agent 325 may schedule execution of the first memory request and the second memory request. For example, MPU agent 325 may schedule DRAM die 370 to execute the first memory request and then schedule DRAM die 370 to execute the second memory request.

In some examples, memory controller 350 may receive the first memory request and the second memory request. In some cases, memory controller 350 may schedule the first memory request relative to the second memory request. For example, memory controller 350 may schedule the first memory request based the first memory request being associated with GPU 310 (e.g., or a PU of buffer die 315) and may schedule the second memory request based on the second memory request being associated with a processing unit of DRAM die 370. Based on the scheduling, memory controller 350 may allow the first memory request to proceed to DRAM die 370. DRAM die 370 may read the data at bank 0, row 2, col 0 and provide the data read from this location to GPU 310 (e.g., or to a PU of buffer die 315). In some cases, a PU of memory bank 0 (e.g., PU 0) may remain disabled while DRAM die 370 reads the data at bank 0, row 2, col 0 for GPU 310 (e.g., or for a PU of buffer die 315). For example, based on the first memory request being associated with GPU 310 (e.g., or with a PU of buffer die 315), memory controller 350 may maintain PU 0 in a disabled state (e.g., avoid enabling processing of memory requests at PU 0, block or bypass processing of memory requests at PU 0, etc.).

Memory controller 350 may determine that the second memory request is for processing at one or more PUs of DRAM die 370. For example, memory controller 350 may determine that the second memory request is configured for processing at PU 0 based on data in memory bank 0 (e.g., data read from bank 0, row 0, col 1). Accordingly, memory controller 350 may be configured to enable PU 0 for processing of the second memory request. In some cases, memory controller 350 may write to a known memory location associated with PU 0. For example, memory controller 350 may write to a register (e.g., an activation register associated with PU 0). In some examples, memory controller 350 may write one or more bits to a known memory location (e.g., writing binary 1 enables, writing binary 0 disables, or vice versa). In some cases, DRAM die 370 (e.g., logical circuitry of DRAM die 370, a PU of DRAM die 370) may check the known memory location (e.g., regularly check the known memory location, poll the known memory location, etc.) before processing a memory request. The known memory location may be on a host memory (e.g., system memory), on a memory on buffer die 315, on a memory bank of a DRAM die of HBM 305 (e.g., on memory bank 0 of DRAM die 370), etc. Alternatively, memory controller 350 may send an enable message to DRAM die 370 to enable PU 0.

Accordingly, memory controller 350 may enable PU 0 to process the second memory request, and thus, based on PU 0 being enabled, PU 0 may process data associated with the second memory request (e.g., data read from memory bank 0, row 0, col 1). In some examples, based on the second memory request being processed at PU 0, memory controller 350 may disable PU 0. For example, memory controller 350 may write to a register (e.g., the activation register associated with PU 0). In some examples, memory controller 350 may write one or more bits to a known memory location (e.g., writing binary 1 enables, writing binary 0 disables, or vice versa). In some cases, a value that enables processing may be referred to as an activation value, and a value that disables processing may be referred to as a deactivation value. In some cases, DRAM die 370 (e.g., logical circuitry of DRAM die 370, a PU of DRAM die 370) may check the known memory location (e.g., regularly check the known memory location, poll the known memory location, etc.) before processing a third memory request (e.g., a memory request after the second memory request). When DRAM die 370 determines that PU 0 is disabled, DRAM die 370 may process the third memory request (e.g., read data and provide the read data to the requesting entity, without processing the read data at PU 0). Alternatively, memory controller 350 may send a disable message to DRAM die 370 to disable PU 0.

In some examples, memory controller 350 may toggle a bit of an activation register before sending a DRAM PIM memory request to DRAM die 370. The toggling of the bit may indicate that PU 0 of DRAM die 370 is enabled for processing. In some cases, PU 0 may check the activation register and determine that it is enabled for processing. Accordingly, PU 0 may process the DRAM PIM memory request. In some cases, memory controller 350 may again toggle the bit of the activation register after sending the DRAM PIM memory request to DRAM die 370. This toggling of the bit may indicate that PU 0 of DRAM die 370 is disabled for processing. Accordingly, if PU 0 were to receive a GPU memory request (e.g., after the DRAM PIM memory request), PU 0 may check the activation register and determine that it is disabled for processing. Accordingly, PU 0 may perform the memory operation of the GPU memory request (e.g., read, write, etc.) without processing the data associated with the memory operation. For example, PU 0 may write data from the GPU to memory bank 0, or may read data from memory bank 0 and provide the read data to the GPU.

In one or more examples, MPU agent 325 and/or a memory controller of buffer die 315 (e.g., memory controller 350, memory controller 355) may enable processing of a memory request on a PU of a DRAM die of HBM 305 (e.g., DRAM die 370, DRAM die 375) based on MPU agent 325 and/or a memory controller of buffer die 315 modifying a memory request.

For ease of explanation, MPU agent 325 and/or a memory controller of buffer die 315 may be referred to as a "digital circuit." For example, the "digital circuit" may be based on and/or incorporate at least a portion of MPU agent 325 and/or a memory controller of buffer die 315 (e.g., memory controller 350, memory controller 355). The at least portion of MPU agent 325 and/or a memory controller of buffer die 315 incorporated may include software, firmware, hardware, operations performed by MPU agent 325 and/or a memory controller of buffer die 315, etc. Accordingly, in some examples, the digital circuit may receive a first memory request for processing on a first memory die of multiple memory dies of the stacked memory module.

In some examples, based on the first memory request being configured for processing on the first memory die (e.g., at PU 0), the digital circuit may modify the first memory request. The modified first memory request may be based on the digital circuit adding an indicator to the first memory request that indicates to process the first memory request at the first memory die. For example, the digital circuit may add or modify a field of the first memory request. In some cases, the digital circuit may modify a memory operation indicator. For example, the first memory request may include a memory operation indicator that indicates an operation such as read, write, etc. The digital circuit may modify the memory operation indicator to indicate the memory operation is for PIM or processing on the DRAM die. In some cases, digital circuit may modify a read indicator to be a PIM memory operation indicator or MPU memory operation indicator (e.g., PIM read indicator, MPU read indicator, PIM write indicator, MPU write indicator, etc.).

In some examples, the digital circuit may send the modified first memory request to a processing unit on the first memory die (e.g., PU 0). The first memory request may be processed on the first memory die based on the indicator indicating to process the first memory request at the first memory die. Accordingly, modifying the memory request may "activate" the processing unit that receives the modified memory request.

In some examples, the digital circuit may receive a second memory request for processing on a second processing unit (e.g., a processing unit external to a DRAM die, an off-die processing unit). In some cases, the digital circuit may provide data fetched from a second memory die of the stacked memory module to the second processing unit based on the second memory request. The digital circuit may maintain the second memory request as is (e.g., no modifications, no modifications to memory operation indicator of the second memory request) based on the digital circuit determining the second memory request is for a processing unit external to a DRAM die of HBM 305.

In some examples, the second memory request may be processed on the second processing unit, and at least a portion of accessing data associated with the modified first memory request or processing the modified first memory request may overlap at least a portion of processing the second memory request on the second processing unit. Additionally, or alternatively, at least a portion of accessing data associated with the modified first memory request or processing the modified first memory request may overlap at least a portion of fetching the data from the second memory die. In some cases, the second processing unit may include a processing unit on buffer die 315 or processing element of GPU 310. In some cases, a processing unit on buffer die 315 or GPU 310 may be communicatively coupled to the digital circuit. In some examples, data associated with the first memory request may be stored in a memory bank of the first memory die (e.g., memory bank 0 of DRAM die 370). Data associated with the second memory request may be stored in a memory bank of the second memory die (e.g., memory bank 1 of DRAM die 370). In some cases, the memory bank associated with the first memory request may be the same memory bank associated with the second memory request. For example, the memory bank of the first memory die may be a same memory bank of the second memory die (e.g., the second memory die may be the first memory die).

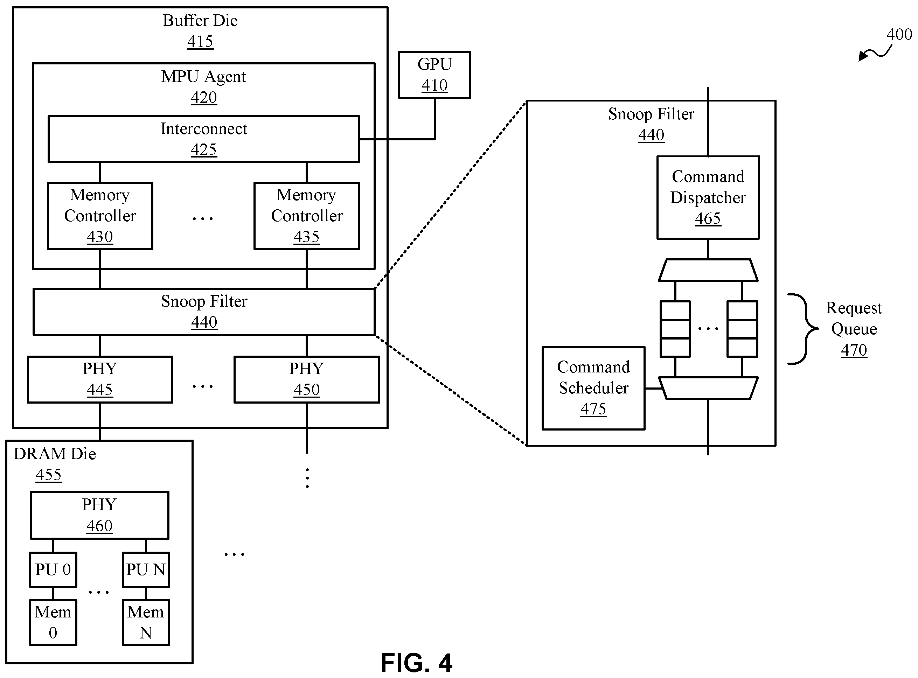

**FIG. 4** illustrates an example system 400 in accordance with one or more implementations as described herein. In some configurations, one or more aspects of system 400 may be implemented by or in conjunction with MPU agent 140 of FIG. 1 and/or MPU agent 230 of FIG. 2. In some configurations, one or more aspects of system 400 may be implemented by or in conjunction with machine 105, components of machine 105, or any combination thereof.

In the illustrated example, system 400 may include GPU 410, buffer die 415 (e.g., of an HBM such as HBM 305), and MPU agent 420. MPU agent 420 may include interconnect 425, memory controller 430, memory controller 435, snoop filter 440, PHY 445, and PHY 450. System 400 may include DRAM die 455 (e.g., of an HBM such as HBM 305). DRAM die 455 may include PHY 460, one or more processing units (e.g., PU 0 to PU N-1 or PU 1 to PU N), and one or more memory banks (e.g., memory bank 0 to memory bank N). As shown, snoop filter 440 may include command dispatcher 465, request queue 470, and command scheduler 475.

In some examples, command dispatcher 465 may dispatch commands associated with memory requests to request queue 470. In some cases, request queue 470 may include one or more request queues. In some cases, request queue 470 may include N request queues. For example, request queue 470 may include a first request queue for a first memory bank of DRAM die 455, a second request queue for a second memory bank of DRAM die 455, up to N request queues for N memory banks of DRAM die 455. Accordingly, command dispatcher 465 may dispatch a command for a first memory bank of DRAM die 455 to a first request queue, dispatch a command for a second memory bank of DRAM die 455 to a second request queue, and so on. In some cases, snoop filter 440 may issue commands based on command scheduler 475. For example, command scheduler 475 may schedule a memory request for GPU processing before a memory request for DRAM die PU processing, and so forth. In some cases, an MPU agent (e.g., MPU agent 420) and/or a memory controller (e.g., memory controller 430, memory controller 435, etc.) may include at least one of a command dispatcher (e.g., LD/ST control 330), a request queue (e.g., shared buffer 340), and/or a command scheduler (e.g., scheduler 335).

In some examples, snoop filter 440 may enable and/or disable a processing unit of DRAM die 455 based on a memory request. In some aspects, snoop filter 440 may include logical circuitry (e.g., microcontrollers, processors, memory, etc.) that is configured to monitor memory requests. When snoop filter 440 receives a memory request, snoop filter 440 may query MPU agent 420 to determine whether the memory request is for processing at a PU of DRAM die 455. In some cases, a memory request may include an identifier that indicates whether the memory request is for processing at a PU of DRAM die 455, at GPU 410, or at a PU of buffer die 415.

When snoop filter 440 determines that the memory request is for processing at PU 0 of DRAM die 455, snoop filter 440 may enable PU 0. When snoop filter 440 determines that the memory request is for processing outside of DRAM die 455 (e.g., at GPU 410, at a processing unit of buffer die 415), snoop filter 440 may maintain PU 0 in a disabled state (e.g., avoid enabling processing of memory requests at PU 0, block or bypass processing of memory requests at PU 0, etc.).

In some examples, snoop filter 440 may be configured to enable PU 0 of DRAM die 455 for processing a memory request assigned to PU 0 (e.g., or associated with data at memory bank 0, which is associated with PU 0). In some cases, snoop filter 440 may write to a known memory location associated with PU 0. For example, snoop filter 440 may write to a register (e.g., an activation register associated with PU 0). In some examples, snoop filter 440 may write one or more bits to a known memory location (e.g., writing binary 1 enables, writing binary 0 disables, or vice versa). In some cases, DRAM die 370 (e.g., logical circuitry of DRAM die 370, a PU of DRAM die 370 such as PU 0) may check the known memory location (e.g., regularly check the known memory location, poll the known memory location, etc.) before processing a memory request. In some cases, receiving a memory request may trigger a processing unit to check a bit of a register associated with that processing unit to determine whether the processing unit is enabled to process data for that memory request.

Accordingly, snoop filter 440 may enable PU 0 to process the memory request, and thus, based on PU 0 being enabled, PU 0 may process data associated with the memory request (e.g., data read from an indicated location of memory bank 0). In some examples, based on the memory request being processed at PU 0, snoop filter 440 may disable PU 0. For example, snoop filter 440 may write to the register (e.g., the activation register associated with PU 0). In some examples, snoop filter 440 may write one or more bits to the known memory location (e.g., writing binary 1 enables, writing binary 0 disables, or vice versa). In some cases, DRAM die 370 (e.g., logical circuitry of DRAM die 370, a PU of DRAM die 370 such as PU 0) may check the known memory location (e.g., regularly check the known memory location, poll the known memory location, etc.) before processing another memory request (e.g., a subsequent memory request). When DRAM die 370 determines that PU 0 is disabled, DRAM die 370 may process the subsequent memory request (e.g., read data and provide the read data to the requesting entity, without processing the read data at PU 0). Alternatively, snoop filter 440 may send a disable message to DRAM die 370 to disable PU 0.

In some examples, snoop filter 440 may toggle a bit of an activation register before sending a DRAM PIM memory request to DRAM die 370. The toggling of the bit may indicate that PU 0 of DRAM die 370 is enabled for processing. In some cases, PU 0 may check the activation register and determine that it is enabled for processing. Accordingly, PU 0 may process the DRAM PIM memory request. In some cases, snoop filter 440 may again toggle the bit of the activation register after sending the DRAM PIM memory request to DRAM die 370. This toggling of the bit may indicate that PU 0 of DRAM die 370 is disabled for processing. Accordingly, if PU 0 were to receive a memory request for processing at GPU 410 or at a processing unit of buffer die 415 (e.g., after the DRAM PIM memory request), PU 0 may check the activation register and determine that it is disabled for processing. Accordingly, PU 0 may perform the memory operation of the GPU memory request (e.g., read, write, etc.) without processing the data associated with the memory operation. For example, PU 0 may write data from GPU 410 to memory bank 0, or may read data from memory bank 0 and provide the read data to GPU 410.

Accordingly, the systems and methods described herein provide a hybrid architecture for processing in memory (PIM) based on: (a) adding PUs to buffer dies of HBM modules; and (b) the HBM modules being configured to provide concurrent GPU-PIM execution. For example, based on the systems and methods described, the GPU can access HBM during PIM execution. Also, the systems and methods described may include adding PUs to buffer dies (BD) of HBM modules in addition to PUs implemented on the DRAM dies (DD) of HBM modules. Adding PUs to the BD of an HBM module can significantly increase the compute resources of the HBM module because the BD has more available area compared to DRAM die layers of the HBM module. Also, the transistor process node of a BD may differ from the transistor process node of a DD. The transistor process node can indicate a measurement of the size of the transistors and other components on a semiconductor chip. For example, the transistor process node can represent the smallest dimension that can be reliably manufactured using a specific process technology (e.g., 10 nanometer (nm), 7 nm, 5 nm, 3 nm, etc.). In some cases, the logic transistor process node used to fabricate features of a BD may be smaller than the memory transistor process node used to fabricate features of a DD, allowing the BD to incorporate additional compute resources (e.g., additional PUs) in a given area of the BD compared to the same area of a DD (e.g., 10 PUs fit in a given area of a BD while 2 PUs fit in the same area of the DD).

In some examples, a BD may include an MPU agent that orchestrates data movement between DRAM die PUs and buffer die PUs. In some cases, the MPU agent may control the execution of the DRAM die PUs. The systems and methods described herein provide concurrent execution of GPU processes and DRAM die PU processes. For example, the GPU and a DRAM die PU may access memory of an HBM concurrently. The systems and methods may provide at least two different hardware mechanisms to enable GPU-MPU concurrent execution. In some cases, one mechanism may be based on a custom memory controller. In some cases, one mechanism may be based on a region snoop filter. Thus, the systems and methods described provide concurrent GPU PIM execution. Accordingly, the systems and methods increase compute capabilities, improve system performance, and reduce latency.

The systems and methods provide increased compute resources based on PUs in DRAM dies and buffer dies of HBM modules. BD PUs use logic process node. In some examples, an MPU agent (e.g., MPU agent 420 in conjunction with a memory controller and/or a snoop filter such as memory controller 430 and/or snoop filter 440) controls execution of DRAM die PUs and orchestrates data sharing between GPUs, DRAM die PUs, and buffer die PUs.

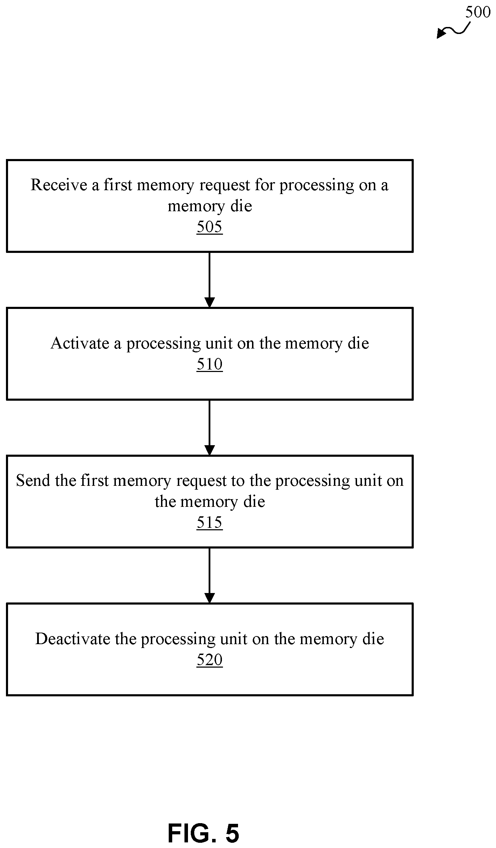

**FIG. 5** depicts a flow diagram illustrating an example method 500 associated with the disclosed systems, in accordance with example implementations described herein. In some configurations, one or more aspects of method 500 may be implemented by or in conjunction with MPU agent 140 of FIG. 1 and/or MPU agent 230 of FIG. 2. In some configurations, one or more aspects of method 500 may be implemented by or in conjunction with machine 105, components of machine 105, or any combination thereof. The depicted method 500 is just one implementation and one or more operations of method 500 may be rearranged, reordered, omitted, and/or otherwise modified such that other implementations are possible and contemplated.

At 505, method 500 may include receiving a first memory request for processing on a memory die. For example, a digital circuit (e.g., memory controller, snoop filter) may receive a first memory request for processing on a first memory die of multiple memory dies of the stacked memory module. In some cases, the digital circuit may be on a base die (e.g., buffer die) of a stacked memory module (e.g., HBM module).

At 510, method 500 may include activating a processing unit on the memory die. For example, based on the first memory request being configured for processing on the first memory die, the digital circuit may activate a processing unit on the first memory die.

At 515, method 500 may include sending the first memory request to the processing unit on the memory die. For example, the digital circuit may send the first memory request to the processing unit on the first memory die. The first memory request may be processed on the first memory die based on activating the processing unit on the first memory die and sending the first memory request to the processing unit on the first memory die.

At 520, method 500 may include deactivating the processing unit on the memory die. For example, the digital circuit may deactivate the processing unit on the first memory die based on sending the first memory request to the processing unit on the first memory die.

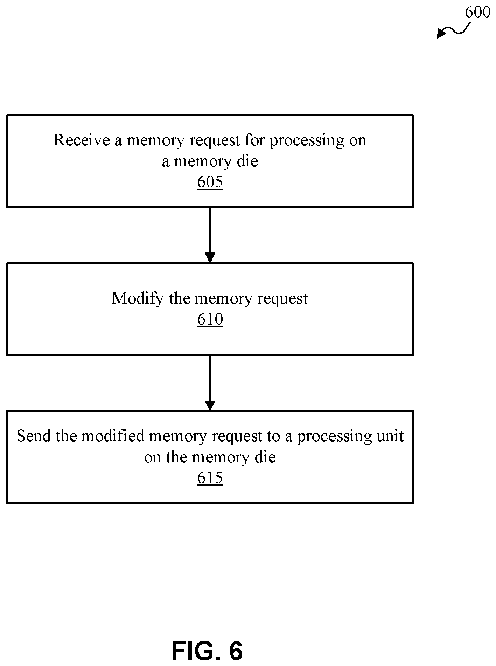

**FIG. 6** depicts a flow diagram illustrating an example method 600 associated with the disclosed systems, in accordance with example implementations described herein. In some configurations, one or more aspects of method 600 may be implemented by or in conjunction with MPU agent 140 of FIG. 1 and/or MPU agent 230 of FIG. 2. In some configurations, one or more aspects of method 600 may be implemented by or in conjunction with machine 105, components of machine 105, or any combination thereof. The depicted method 600 is just one implementation and one or more operations of method 600 may be rearranged, reordered, omitted, and/or otherwise modified such that other implementations are possible and contemplated.

At 605, method 600 may include receiving a memory request for processing on a memory die. For example, a digital circuit (e.g., memory controller, snoop filter) may receive a first memory request for processing on a first memory die of multiple memory dies of the stacked memory module. In some cases, the digital circuit may be on a base die (e.g., buffer die) of a stacked memory module (e.g., HBM module).

At 610, method 600 may include modifying the memory request. For example, based on the first memory request being configured for processing on the first memory die, the digital circuit may modify the first memory request, the modified first memory request being based on the microcontroller adding an indicator that indicates to process the first memory request at the first memory die.

At 615, method 600 may include sending the modified memory request to a processing unit on the memory die. For example, the digital circuit may send the modified first memory request to a processing unit on the first memory die, the first memory request being processed on the first memory die based on the indicator indicating to process the first memory request at the first memory die.

In the examples described herein, the configurations and operations are example configurations and operations, and may involve various additional configurations and operations not explicitly illustrated. In some examples, one or more aspects of the illustrated configurations and/or operations may be omitted. In some embodiments, one or more of the operations may be performed by components other than those illustrated herein. Additionally, or alternatively, the sequential and/or temporal order of the operations may be varied.

Certain embodiments may be implemented in one or a combination of hardware, firmware, and software. Other embodiments may be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wired and/or wireless communication device such as a switch, router, network interface controller, cellular telephone, smartphone, tablet, netbook, wireless terminal, laptop computer, a femtocell, High Data Rate (HDR) subscriber station, access point, printer, point of sale device, access terminal, or other personal communication system (PCS) device. The device may be wireless, wired, mobile, and/or stationary.

As used within this document, the term "communicate" is intended to include transmitting, or receiving, or both transmitting and receiving. Similarly, the bidirectional exchange of data between two devices (both devices transmit and receive during the exchange) may be described as 'communicating', when only the functionality of one of those devices is being claimed. The term "communicating" as used herein with respect to wired and/or wireless communication signals includes transmitting the wired and/or wireless communication signals and/or receiving the wired and/or wireless communication signals. For example, a communication unit, which is capable of communicating wired and/or wireless communication signals, may include a wired/wireless transmitter to transmit communication signals to at least one other communication unit, and/or a wired/wireless communication receiver to receive the communication signal from at least one other communication unit.

Some embodiments may be used in conjunction with various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some embodiments may be used in conjunction with one or more types of wireless communication signals and/or systems following one or more wireless communication protocols, for example, Radio Frequency (RF), Infrared (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{™}, Global Positioning System (GPS), Wi-Fi, Wi-Max, ZigBee^{™}, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

Although an example processing system has been described above, embodiments of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more components of computer program instructions, encoded on computer storage medium for execution by, or to control the operation of, information/data processing apparatus. Alternatively, or in addition, the program instructions can be encoded on an artificially-generated propagated signal, for example a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (for example multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, for example an FPGA (field programmable gate array) or an ASIC (application-specific integrated circuit). The apparatus can also include, in addition to hardware, code that creates an execution environment for the computer program in question, for example code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a component, component, subroutine, object, or other unit suitable for use in a computing environment. A computer program may, but need not, correspond to a file in a file system. A program can be stored in a portion of a file that holds other programs or information/data (for example one or more scripts stored in a markup language document), in a single file dedicated to the program in question, or in multiple coordinated files (for example files that store one or more components, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, for example magnetic, magneto-optical disks, or optical disks. However, a computer need not have such devices. Devices suitable for storing computer program instructions and information/data include all forms of non-volatile memory, media and memory devices, including by way of example semiconductor memory devices, for example EPROM, EEPROM, and flash memory devices; magnetic disks, for example internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, for example a CRT (cathode ray tube) or LCD (liquid crystal display) monitor, for displaying information/data to the user and a keyboard and a pointing device, for example a mouse or a trackball, by which the user can provide input to the computer. Other kinds of devices can be used to provide for interaction with a user as well; for example, feedback provided to the user can be any form of sensory feedback, for example visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, for example as an information/data server, or that includes a middleware component, for example an application server, or that includes a front-end component, for example a client computer having a graphical user interface or a web browser through which a user can interact with an embodiment of the subject matter described herein, or any combination of one or more such back-end, middleware, or front-end components. The components of the system can be interconnected by any form or medium of digital information/data communication, for example a communication network. Examples of communication networks include a local area network ("LAN") and a wide area network ("WAN"), an inter-network (for example the Internet), and peer-to-peer networks (for example ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (for example an HTML page) to a client device (for example for purposes of displaying information/data to and receiving user input from a user interacting with the client device). Information/data generated at the client device (for example a result of the user interaction) can be received from the client device at the server.

While this specification contains many specific embodiment details, these should not be construed as limitations on the scope of any embodiment or of what may be claimed, but rather as descriptions of features specific to particular embodiments. Certain features that are described herein in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain embodiments, multitasking and parallel processing may be advantageous.

Many modifications and other examples as set forth herein will come to mind to one skilled in the art to which these embodiments pertain having the benefit of the teachings presented in the foregoing descriptions and the associated drawings. Therefore, it is to be understood that the embodiments are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method of concurrent memory access, the method comprising:
receiving, at a base die processor on a base die of a stacked memory module, a first memory request for processing on a first memory die of multiple memory dies of the stacked memory module;
based on the first memory request being configured for processing on the first memory die, activating a processing unit on the first memory die;
sending the first memory request to the processing unit on the first memory die, the first memory request being processed on the first memory die based on activating the processing unit on the first memory die and sending the first memory request to the processing unit on the first memory die; and
deactivating the processing unit on the first memory die based on sending the first memory request to the processing unit on the first memory die.

2. The method of claim 1, further comprising:
receiving, at the base die processor, a second memory request for processing on a second processing unit; and
providing data fetched from a second memory die of the stacked memory module to the second processing unit based on the second memory request, wherein a processing unit on the second memory die remains deactivated based on the second processing unit being external to the multiple memory dies of the stacked memory module.

3. The method of claim 2, wherein:
the second memory request is processed on the second processing unit, and
at least a portion of accessing data associated with the first memory request or processing the first memory request overlaps at least a portion of processing the second memory request on the second processing unit.

4. The method of claim 2 or 3, wherein at least a portion of accessing data associated with the first memory request or processing the first memory request overlaps at least a portion of fetching the data from the second memory die.

5. The method of any one of claims 2 to 4, wherein the second processing unit comprises a processing unit on the base die of the stacked memory module or a graphical processing unit that is communicatively coupled to the base die processor of the stacked memory module.

6. The method of any one of claims 2 to 5, wherein:
data associated with the first memory request is stored in a memory bank of the first memory die, and
data associated with the second memory request is stored in a memory bank of the second memory die.

7. The method of any one of claims 1 to 6, wherein:
activating the processing unit on the first memory die comprises toggling a bit of a register of the stacked memory module from a deactivation value to an activation value, and
deactivating the processing unit on the first memory die comprises toggling the bit of the register from the activation value to the deactivation value.

8. The method of any one of claims 1 to 7, wherein the multiple memory dies of the stacked memory module comprise one or more layers of memory dies stacked on top of the base die.

9. The method of any one of claims 1 to 8, wherein the base die processor comprises an interposer connected to processing units on the base die of the stacked memory module, to processing units on the multiple memory dies of the stacked memory module, and to one or more graphical processing units connected to the stacked memory module.

10. The method of any one of claims 1 to 8, wherein the base die processor is incorporated in a memory controller on the base die of the stacked memory module.

11. The method of any one of claims 1 to 8, wherein the base die processor is incorporated in a snoop filter on the base die of the stacked memory module.

12. A method of concurrent memory access, the method comprising:
receiving, at a base die processor on a base die of a stacked memory module, a first memory request for processing on a first memory die of multiple memory dies of the stacked memory module;
based on the first memory request being configured for processing on the first memory die, modifying the first memory request, the modified first memory request being based on the base die processor adding an indicator that indicates to process the first memory request at the first memory die; and
sending the modified first memory request to a processing unit on the first memory die, the first memory request being processed on the first memory die based on the indicator indicating to process the first memory request at the first memory die.

13. The method of claim 12, further comprising:
receiving, at the base die processor, a second memory request for processing on a second processing unit; and
providing data fetched from a second memory die of the stacked memory module to the second processing unit based on the second memory request.

14. The method of claim 13, wherein:
the second memory request is processed on the second processing unit, and
at least a portion of accessing data associated with the modified first memory request or processing the modified first memory request overlaps at least a portion of processing the second memory request on the second processing unit.

15. The method of claim 13 or 14, wherein at least a portion of accessing data associated with the modified first memory request or processing the modified first memory request overlaps at least a portion of fetching the data from the second memory die.
